# EUROPEAN PATENT APPLICATION

(11) **EP 4 199 507 A1**
(43) Date of publication of application: **21.06.2023**
(21) Application number: 21855364.2
(22) Date of filing: 28.07.2021
(51) Int. Cl.: H04N 7/18, G09G 5/00

(54) **IMAGE PROCESSING APPARATUS AND VIRTUAL REALITY DEVICE**

(30) Priority: 11.08.2020 CN 202010799312
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN)
(74) Representative: Zacco GmbH
(86) International application number: PCT/CN2021/108958
(87) International publication number: WO 2022/033311

(57) **Abstract**

An image processing apparatus (100), including: a receiving unit (101), configured to receive image information; and a processing unit (102), configured to process the image information (20) to obtain partial image information (21). The image processing apparatus (100) provided by the present application processes the image information (20) to obtain the partial image information (21), and improves timeliness of a display screen (103) in displaying a partial image when azimuth information in a VR scene changes frequently. The present application further discloses a VR device including an image processing apparatus.

## Description

The present application claims priority to the Chinese Patent Application with an application number of 202010799312.9 and a title of "Image Processing Apparatus and Virtual Reality Device", filed to China National Intellectual Property Administration on August, 11th, 2020, the disclosures of which are hereby incorporated by reference.

### TECHNICAL FIELD

The present application relates to the technical field of virtual reality, and for example, relates to an image processing apparatus and a virtual reality device.

### BACKGROUND

At present, when a virtual reality scene is constructed, in order to implement local display of image information, after a main control chip of a terminal usually determines partial image information in the image information, the partial image information is sent to a display for displaying. Because azimuth information in the virtual reality scene changes frequently, whenever the azimuth information changes, the display needs to acquire the partial image information corresponding to the azimuth information from the main control chip of the terminal, thereby consuming time.

In a process of implementing embodiments of the present disclosure, at least the following problems are found in related technologies: when the azimuth information in the virtual reality scene changes frequently, the display does not display the partial image information in time, causing delayed display of the partial image information.

### SUMMARY

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

Embodiments of the present disclosure provide an image processing apparatus and a Virtual Reality (VR) device, to solve a technical problem that failure to display partial image information timely by a display screen causes delayed display of the partial image information.

In some embodiments, an image processing apparatus includes: a receiving unit, configured to receive image information; and a processing unit, configured to process the image information to obtain partial image information.

In some embodiments, a processing unit is capable of being connected with a display screen and configured to send partial image information to the display screen for displaying.

In some embodiments, a processing unit is a processor operating independently relative to a main control chip of a terminal.

In some embodiments, a processing unit is configured to render image information to generate panoramic image information.

In some embodiments, a processing unit is configured to determine a display region of image information according to azimuth information of the image information to obtain partial image information in the display region.

In some embodiments, a processing unit is configured to adjust azimuth information according to direction information of an azimuth sensor.

In some embodiments, a processing unit is configured to adjust azimuth information according to a user instruction.

In some embodiments, an azimuth sensor is arranged in a VR device and configured to determine direction information based on direction change of the VR device.

In some embodiments, a receiving unit is configured to receive left-eye image information and right-eye image information; and a processing unit is configured to process the left-eye image information to obtain left-eye partial image information, process right-eye image information to obtain right-eye partial image information, and send the left-eye partial image information and the right-eye partial image information to a display screen for displaying.

In some embodiments, image information is 2D image information or 3D image information.

In some embodiments, image information is 3D image information, including: parallax image information, or 2D image information and Depth Of Field (DOF) information.

In some embodiments, an interface protocol of a receiving unit is a High-Definition Multimedia Interface (HDMI), a Mobile Industry Processor Interface (MIPI), an Embedded Display Port (EDP), a Display Port (DP), a Low-Voltage Differential Signaling (LVDS) or a Mini Low Voltage Differential Signaling (Mini-LVDS).

In some embodiments, a VR device includes the above image processing apparatus.

In some embodiments, the VR device is VR glasses.

In some embodiments, the VR device further includes: a display screen, configured to display a partial image corresponding to partial image information.

The image processing apparatus and the VR device provided by embodiments of the present disclosure may achieve the following technical effects:
A processor operating independently relative to a main control chip of a terminal processes image information to obtain partial image information, and when azimuth information in a VR scene changes frequently, timeliness of a display screen in displaying a partial image is improved.

The above general description and the following description are exemplary and explanatory only, and are not intended to limit the present application.

### BRIEF DESCRIPTION OF DRAWINGS

At least one embodiment is illustrated by the corresponding drawings, and the illustrations and drawings do not limit the embodiments. Elements having the same reference numerals in the drawings are shown as similar elements, and the drawings are not intended to limit the scale, where:
Fig. 1 is a schematic diagram of an image processing apparatus provided by embodiments of the present disclosure;
Fig. 2 is a schematic diagram of processing image information to obtain partial image information provided by embodiments of the present disclosure;
Fig. 3 is a schematic plan view of processing image information to obtain partial image information provided by embodiments of the present disclosure; and
Fig. 4 is a schematic diagram of adjusting azimuth information of image information according to direction information of an azimuth sensor provided by embodiments of the present disclosure.

### Reference numerals:

100: image processing apparatus; 101: receiving unit; 102: processing unit; 103: display screen; 104: azimuth sensor; 20: image information; and 21: partial image information.

### DETAILED DESCRIPTION OF EMBODIMENTS

To understand features and technical contents of embodiments of the present disclosure in more detail, implementation of the embodiments of the present disclosure is described in detail below with reference to accompanying drawings; and the accompanying drawings are used for reference only, rather than limiting the embodiments of the present disclosure. In following technical description, for the convenience of explanation, a thorough understanding of the disclosed embodiments is provided through more details. However, at least one embodiment may be implemented without the details. In other cases, to simplify the accompanying drawings, well-known structures and apparatuses may be shown simplistically.

An image processing apparatus 100 provided by embodiments of the present disclosure may be applied to VR scenes, for example, simulating realistic game scenes, so that users play games in realistic scenes in a static state. The image processing apparatus 100 may be a display, which may be integrated into a terminal or a Virtual Reality (VR) device, such as a display in a terminal, a display in a VR helmet, a display in VR glasses and a naked-eye 3D display.

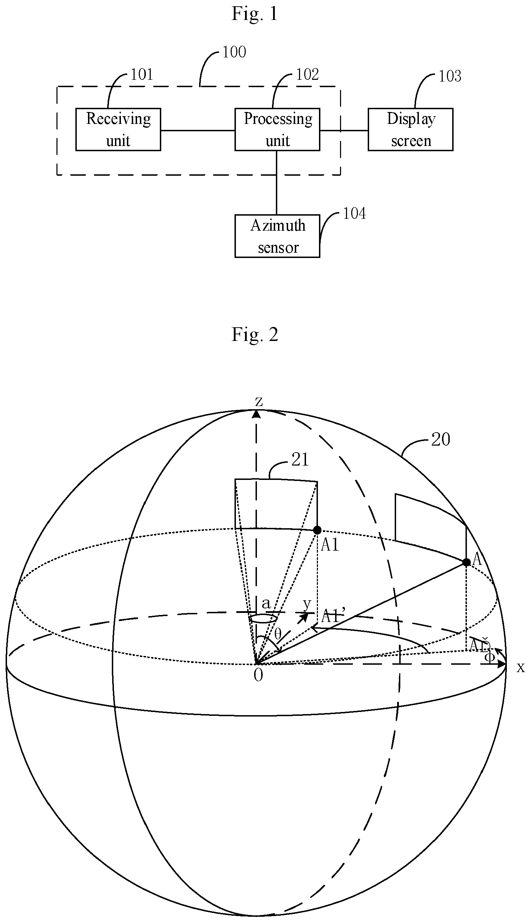

Referring to Fig. 1, embodiments of the present disclosure provide an image processing apparatus 100, including: a receiving unit 101, configured to receive image information 20; and a processing unit 102, configured to process the image information 20 to obtain partial image information 21.

In some embodiments, image information 20 may be panoramic image information or non-panoramic image information. The non-panoramic image information may be original image information obtained by shooting a scene with a camera. Optionally, the original image information present in the form of non-panoramic image information may be spliced and fused to obtain the panoramic image information.

In some embodiments, a processing unit 102 processes image information 20 to obtain partial image information 21. Optionally, the processing unit 102 may adjust azimuth information of the image information 20 to obtain partial image information 21 corresponding to the azimuth information. Optionally, the processing unit 102 may further determine processing for a display region of the image information 20 to obtain partial image information 21 corresponding to the display region.

In some embodiments, the partial image information 21 may be image information after rendering processing; and a processing unit 102 may render the partial image information 21 according to pixels of the partial image information 21 and pixels preset by a display screen 103.

In some embodiments, a processing unit 102 is capable of being connected with a display screen 103 and configured to send partial image information 21 to a display screen 103 for displaying.

In some embodiments, a processing unit 102 is configured to send partial image information 21 to a display screen 103; the display screen 103 receives the partial image information 21; and the display screen 103 displays the partial image information 21.

In some embodiments, a processing unit 102 may be a processor operating independently relative to a main control chip of a terminal.

In some embodiments, a processing unit 102 may be arranged at a position other than a main control chip of a terminal, is a processor operating independently relative to the main control chip of the terminal, and is controlled by the image processing apparatus 100. Because processing for partial image information 21 by the main control chip may cause time delay for obtaining the partial image information 21 by the image processing apparatus 100, in the present application, a processor operating independently relative to a main control chip of a terminal directly processes image information 20 to obtain the partial image information 21, and the partial image information 21 is not generated by the main control chip of the terminal, thereby avoiding that the processor needs to acquire the partial image information 21 corresponding to azimuth information from the main control chip of the terminal every time the azimuth information changes, and improving timeliness of displaying the partial image information 21.

In some embodiments, a processing unit 102 may be configured to render image information 20 to generate panoramic image information. Optionally, rendering may be a process of rendering the image information 20 to a surface of a sphere. Referring to Fig. 2, a point O is a center of the sphere; ϕ is an angle formed by a half plane, passing through a z axis and a point A, and a coordinate plane zOx; θ is an angle between a line segment OA and a positive direction of the z axis; ϕ ranges from 0 degrees to 360 degrees; and θ ranges from 0 degrees to 180 degrees.

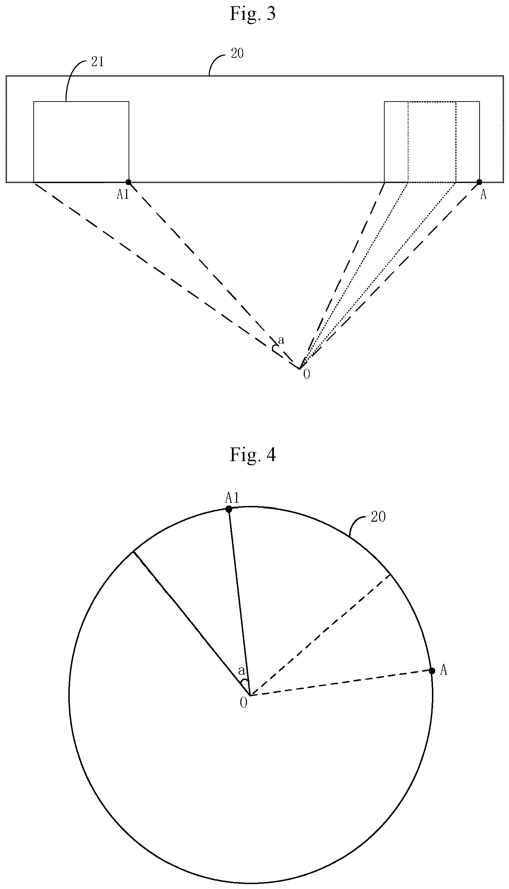

In some embodiments, referring to Figs. 2 and 3, a processing unit 102 may be configured to determine a display region of image information 20 according to azimuth information of the image information 20 to obtain partial image information 21 in the display region.

In some embodiments, azimuth information of image information 20 may be change information of an angle. Optionally, in Fig. 2, the azimuth information of the image information 20 is change information that an angle of ϕ is increased by 60 degrees; and a processing unit 102 increases the angle of ϕ of each point in an initial display region by 60 degrees, and repositions a display region in the image information 20 to obtain partial image information 21 in the repositioned display region. For example, the angle of ϕ of any point A in the initial display region increases by 60 degrees and then reaches a point A1; a point A' is a projection of the point A on a coordinate plane xOy; a point A1' is a projection of the point A1 on the coordinate plane xOy; and ∠A'OA1'=60 degrees.

In some embodiments, azimuth information of image information 20 may also be azimuth information of the image information 20. Optionally, the azimuth information of the image information 20 may be azimuth information of ϕ=20 degrees and θ=10 degrees.

In some embodiments, azimuth information of image information 20 may further include an opening angle of a display region. Referring to Figs. 2 and 3, the opening angle of the display region is a solid angle a that the display region of the image information 20 opens on a projection sphere surface.

In some embodiments, a processing unit 102 may adjust a size of a display region by adjusting an opening angle of the display region, and then scale partial image information 21 in the display region. For example, referring to Fig. 3, when the processing unit 102 reduces the opening angle to 1/2 of the original, the display region corresponding to the opening angle in the image information 20 will also be reduced by 1/2; then, the partial image information 21 in the display region will be adjusted into image information with the same resolution as a display screen 103; and the partial image information 21 with a range reduced by 1/2 will be outputted on the display screen.

In some embodiments, referring to Fig. 4, a processing unit 102 is configured to adjust azimuth information of image information 20 according to direction information of an azimuth sensor 104.

In some embodiments, an azimuth sensor 104 may be a gyroscope or a compass.

In some embodiments, a processing unit 102 is configured to adjust azimuth information according to a user instruction.

In some embodiments, azimuth information may be adjusted by changing a display region of image information 20 on a display screen 103. Optionally, a processing unit 102 may change the display region of the image information 20 on the display screen 103 according to a user instruction. Optionally, the user instruction may be a touch signal, an air gesture signal and a mouse input signal, received by the image processing apparatus 100, of a user for the display screen 103.

Optionally, the touch signal may be a signal received by the image processing apparatus 100 to change the display region when the user touches the display screen 103 to change the display region of the image information 20. Optionally, the mouse input signal may be a signal received by the image processing apparatus 100 to change the display region when the user changes the display region of the image information 20 through a mouse on the display screen 103. Optionally, the air gesture signal may be a signal received by the image processing apparatus 100 to change the display region when the user changes the display region of the image information 20 over the air by gesture.

In some embodiments, an azimuth sensor 104 may be arranged in a VR device and may move with the VR device; for example, the azimuth sensor 104 determines direction information based on motion of the VR device.

In some embodiments, an azimuth sensor 104 may measure an angle and an angular velocity of rotation of the VR device. Optionally, the azimuth sensor 104 may determine direction information through direction change of the VR device.

In some embodiments, an azimuth sensor 104 may be arranged outside the VR device. Optionally, regardless of arrangement position, the azimuth sensor 104 may operate independently as an independent sensor.

In some embodiments, a receiving unit 101 is configured to receive left-eye image information and right-eye image information; and a processing unit 102 is configured to process the left-eye image information to obtain left-eye partial image information, process right-eye image information to obtain right-eye partial image information, and send the left-eye partial image information and the right-eye partial image information to a display screen 103 for displaying.

In some embodiments, left-eye partial image information displayed on a display screen 103 may be transmitted to a left eye of a user; and right-eye partial image information displayed on the display screen 103 may be transmitted to a right eye of the user.

In some embodiments, image information 20 may be 2D image information or 3D image information.

In some embodiments, image information may be 3D image information, including: parallax image information, or 2D image information and DOF information.

In some embodiments, image information 20 includes parallax image information. Optionally, the parallax image information may include left-eye parallax image information received by a left eye of a user and right-eye parallax image information received by a right eye of the user. Optionally, the left-eye parallax image information received by the left eye of the user and the right-eye parallax image information received by the right eye of the user form 3D image information.

Optionally, the image information 20 includes 2D image information and DOF information; and the 2D image information and the DOF information may form a 3D visual effect.

In some embodiments, an interface protocol of a receiving unit 101 may be an HDMI, an MIPI, an EDP, a DP, an LVDS or a Mini-LVDS.

In some embodiments, an interface protocol of a receiving unit 101 may be a High-Definition Multimedia Interface (HDMI), a Mobile Industry Processor Interface (MIPI), an Embedded Display Port (EDP), a Display Port (DP), a Low-Voltage Differential Signaling (LVDS) or a Mini Low Voltage Differential Signaling (Mini-LVDS).

Embodiments of the present disclosure provide a VR device, including the above image processing apparatus 100.

In some embodiments, the VR device may be VR glasses.

In some embodiments, the VR device may further include: a display screen 103, configured to display a partial image corresponding to partial image information 21.

In some embodiments, a display screen 103 may be a naked-eye 3D display screen.

The above description and drawings sufficiently illustrate the embodiments of the present disclosure to enable those skilled in the art to practice them. Other embodiments may comprise structural, logical, electrical, process, and other changes. The embodiments represent only possible changes. Unless expressly required, individual components and functions are optional and the order of operations may be changed. Parts and features of some embodiments may be included in or substituted for parts and features of other embodiments. The scope of the disclosed embodiments includes the full scope of the claims, and all available equivalents of the claims. When used in the present application, although the terms of "first", "second", etc. may be possibly used in the present application to describe various elements, these elements should not be limited by these terms. These terms are only used to distinguish one element from another. For example, without changing the meaning of the description, a first element may be called as a second element, and similarly, the second element may be called as the first element, as long as all of "the first elements" that appear are consistently renamed and all of "the second elements" that appear are consistently renamed. The first element and the second element are both elements, but may not be the same element. Moreover, the terms used in the present application are used to describe the embodiments only and not to limit the claims. As used in the illustration of the embodiments and the claims, unless clearly indicated in the context, the singular forms "a", "an" and "the" are also intended to include the plural forms. Similarly, the term "and/or" as used in the present application is meant to include any and all possible combinations of one or more of the associated listings. In addition, when used in the present application, the term "comprise" and its variations "comprises" and/or "comprising", etc., refer to the presence of stated features, integers, steps, operations, elements, and/or components, but does not preclude the presence or addition of one or more other features, integers, steps, operations, elements, components and/or groupings of these. Without further limitations, an element limited by the phrase "comprises a..." does not preclude the presence of additional identical elements in the process, method or device that includes the element. Herein, the difference of each embodiment from each other may be the focus of explanation. The same and similar parts among all of the embodiments may be referred to each other. For the method and product disclosed by the embodiments, if the method and product correspond to a method part disclosed by the embodiments, the description of the method part can be referred to for the related part.

Those skilled in the art may recognize that the units and algorithm steps of each example described in conjunction with the embodiments disclosed herein can be implemented in electronic hardware, or a combination of computer software and electronic hardware. Whether these functions are performed in hardware or software may depend on the specific application and design constraints of the technical solution. Those skilled in the art may use different methods for implementing the described functions for each particular application, but such implementations should not be considered beyond the scope of the embodiments of the present disclosure. Those skilled in the art may clearly understand that, for the convenience and brevity of description, the corresponding processes in the above method embodiments may be referred to for the working processes of the above systems, devices and units, which will not be repeated here.

In the embodiments disclosed herein, the disclosed method and product (including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units, that is, may be located in one place, or may be distributed on multiple network units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

In the accompanying drawings, width, length, thickness and the like of structures such as elements or layers may be exaggerated for clarity and description. When a structure such as an element or layer is referred to as being "arranged" (or "mounted", "laid", "attached", "coated" and the like) "above" or "on" another element or layer, the structure such as the element or layer may be directly "arranged" "above" or "on" another element or layer, or a structure such as an intermediate element or layer exists between the element or layer and the another element or layer and even is partially embedded in the another element or layer.

## Claims

1. An image processing apparatus, comprising:
a receiving unit, configured to receive image information;
a processing unit, configured to process the image information to obtain partial image information.

2. The apparatus according to claim 1, wherein the processing unit is capable of being connected with a display screen and configured to send the partial image information to the display screen for displaying.

3. The apparatus according to claim 1, wherein
the processing unit is a processor operating independently relative to a main control chip of a terminal.

4. The apparatus according to claim 1, wherein
the processing unit is configured to render the image information to generate panoramic image information.

5. The apparatus according to any one of claims 1-4, wherein
the processing unit is configured to determine a display region of the image information according to azimuth information of the image information, to obtain the partial image information in the display region.

6. The apparatus according to claim 5, wherein
the processing unit is configured to adjust the azimuth information according to direction information of an azimuth sensor.

7. The apparatus according to claim 5, wherein the processing unit is configured to adjust the azimuth information according to a user instruction.

8. The apparatus according to claim 6, wherein
the azimuth sensor is arranged in a Virtual Reality, VR, device and configured to determine the direction information based on direction change of the VR device.

9. The apparatus according to any one of claims 2-8, wherein
the receiving unit is configured to receive left-eye image information and right-eye image information;
the processing unit is configured to process the left-eye image information to obtain left-eye partial image information, process the right-eye image information to obtain right-eye partial image information, and send the left-eye partial image information and the right-eye partial image information to the display screen for displaying.

10. The apparatus according to claim 1, wherein the image information is 2D image information or 3D image information.

11. The apparatus according to claim 10, wherein the image information is 3D image information, comprising:
parallax image information, or
2D image information and Depth Of Field, DOF, information.

12. The apparatus according to any one of claims 1-11, wherein
an interface protocol of the receiving unit is a High-Definition Multimedia Interface, HDMI, a Mobile Industry Processor Interface, MIPI, an Embedded Display Port, EDP, a Display Port, DP, a Low-Voltage Differential Signaling, LVDS, or a Mini Low Voltage Differential Signaling, Mini-LVDS.

13. A VR device, comprising the image processing apparatus of any one of claims 1-12.

14. The VR device according to claim 13, wherein the VR device is VR glasses.

15. The VR device according to claim 13, further comprising: a display screen, configured to display a partial image corresponding to the partial image information.
